# FASCICULE DE BREVET EUROPEEN

(11) **EP 1 951 543 B1**
(45) Date de publication et mention de la délivrance du brevet: **17.03.2010**
(21) Numéro de dépôt: 06831289.1
(22) Date de dépôt: 24.10.2006
(51) Int. Cl.: B60N 2/08

(54) **MECANISME DE VERROUILLAGE DES GLISSIERES D'UN SIEGE DE VEHICULE AUTOMOBILE**
MECHANISMUS ZUM ARRETIEREN DER SCHIENEN EINES KRAFTFAHRZEUGSITZES
MECHANISM FOR LOCKING THE RAILS OF A MOTOR VEHICLE SEAT

(30) Priorité: 21.11.2005 FR 0553515
(43) Date de publication de la demande: 06.08.2008
(73) Titulaire: Renault SAS, 92100 Boulogne Billancourt (FR)
(72) Inventeur: MARTEL, Michel, F-78150 Le Chesnay (FR)
(86) Numéro de dépôt international: PCT/FR2006/051095
(87) Numéro de publication internationale: WO 2007/057590

(56) Documents cités:
- DE-A1- 10 342 724
- FR-A- 2 691 681
- PATENT ABSTRACTS OF JAPAN vol. 2003, no. 12, 5 décembre 2003 (2003-12-05) -& JP 2004 123001 A (KANTO AUTO WORKS LTD), 22 avril 2004 (2004-04-22)

## Description

La présente invention concerne un mécanisme de verrouillage des glissières d'un siège de véhicule automobile, notamment d'une rangée arrière de sièges coulissant d'un véhicule automobile

Un véhicule automobile est généralement équipe d'un ensemble de sièges positionnes par exemple derrière le siège avant du conducteur. Cet ensemble se présente le plus souvent sous la forme d'une rangée de sièges indépendants les uns des autres. Pour répondre à un besoin de modularité de l'habitacle du véhicule, chaque siège est équipé de glissières autorisant un déplacement longitudinal. Ces glissières présentent un mécanisme de verrouillage permettant leur maintien en position ou leur libération par l'intermédiaire d'un palonnier émergeant sous chaque siège et accessible par l'utilisateur depuis l'avant du siège.

L'utilisateur qui souhaite moduler la rangée de sièges arrière depuis le coffre du véhicule dispose en outre de moyens reliés au palonnier avant permettant de dégager les sièges vers l'avant du véhicule et de libérer un maximum de place utile dans le coffre. Ces moyens ne sont pas appropries à une manipulation simple et intuitive des sièges arrière. En effet, le sens des commandes est inversé lorsque l'utilisateur les utilise depuis le coffre, ce qui donne lieu a des erreurs de manipulation et n'améliore pas l'ergonomie liée à cette fonction. On connaît par le document FR 2 691 681 un mécanisme de réglage des glissières d'un siège pour véhicule automobile.

L' invention vise a palier ces inconvénients en proposant un mécanisme de verrouillage s'adaptant sur chaque siège et offrant le même type de commande adaptée pour une manipulation des sièges arrière depuis le coffre. Ce type de commande est en outre adapté pour répondre à un grand nombre de sollicitation en opérant avec un faible débattement.

A cet effet, l'objet de l'invention concerne un mécanisme de verrouillage des glissières d'un siège de véhicule automobile comportant une première glissière liée à un élément de structure selon un axe longitudinal du véhicule, une seconde glissière coulissant dans la première glissière et supportant la cadre d'assise du siège, un premier palonnier pivotant dans la seconde glissière selon un axe sensiblement perpendiculaire aux deux glissières coaxiales maintenues dans une position souhaitée l'une par rapport à l'autre par un mécanisme de rappel du premier palonnier, un second palonnier comportant une première excroissance orientée vers l'avant du siège et une deuxième excroissance orientée vers l'arrière du siège de sorte que le déplacement longitudinal du siège est commandé par les deux excroissances, **caractérisé en ce que** le second palonnier pivotant dans la seconde glissière est lié au premier palonnier.

La présente invention permet d'obtenir des poignées de manipulation du mécanisme de verrouillage des glissières qui permettent de déplacer un siège lorsqu'un occupant y est assis ou pas. L'utilisation de sièges munis du mécanisme selon l'invention se fait de façon intuitive et uniforme quelque soit le côté de manipulation. De plus, ce mécanisme garantit la sûreté de fonctionnement du verrouillage et de la libération des glissières avec un minimum de pièces.

Le mécanisme de verrouillage des glissières d'un siège de véhicule automobile peut présenter les caractéristiques suivantes, individuellement ou en combinaison et faisant l'objet des revendications dépendantes:
- le mécanisme de rappel du premier palonnier est une lame métallique dont une première extrémité est solidaire de la seconde glissière et la seconde extrémité comporte au moins une excroissance indexant la position du siège dans la première glissière ;
- la première excroissance du second palonnier est soudée au premier palonnier ; - le premier palonnier et le second palonnier sont solidaires d'un même axe de rotation constituant la liaison pivot ;
- la première excroissance du second palonnier coulisse sur le premier palonnier ;
- le second palonnier est lié à un axe de rotation différent de celui du premier palonnier permettant un débattement réduit de la deuxième excroissance arrière ; et
- au moins un carter métallique monté sur la seconde glissière protège le débattement du second palonnier.

La présente invention concerne en outre un siège de véhicule automobile comportant un tel mécanisme de verrouillage.

D'autres caractéristiques et avantages de l'invention apparaîtront à la lecture de la description détaillée d'un mode de réalisation pris à titre d'exemple non limitatif, en liaison avec les dessins annexés, sur lesquels :
- la figure 1 A représente de façon schématique en perspective un siège arrière de véhicule comportant un mécanisme
de verrouillage de ses glissières selon un premier mode de réalisation de l'invention ;
- la figure 1 B représente de façon schématique une section latérale d'un siège de véhicule comportant un mécanisme de verrouillage de ses glissières selon le premier mode de réalisation de l'invention ;
- la figure 2A représente de façon schématique en perspective un siège arrière de véhicule comportant un mécanisme de verrouillage de ses glissières selon un second mode de réalisation de l'invention ;
- la figure 2B représente de façon schématique une section latérale d'un siège de véhicule comportant un mécanisme de verrouillage de ses glissières selon le second mode de réalisation de l'invention.

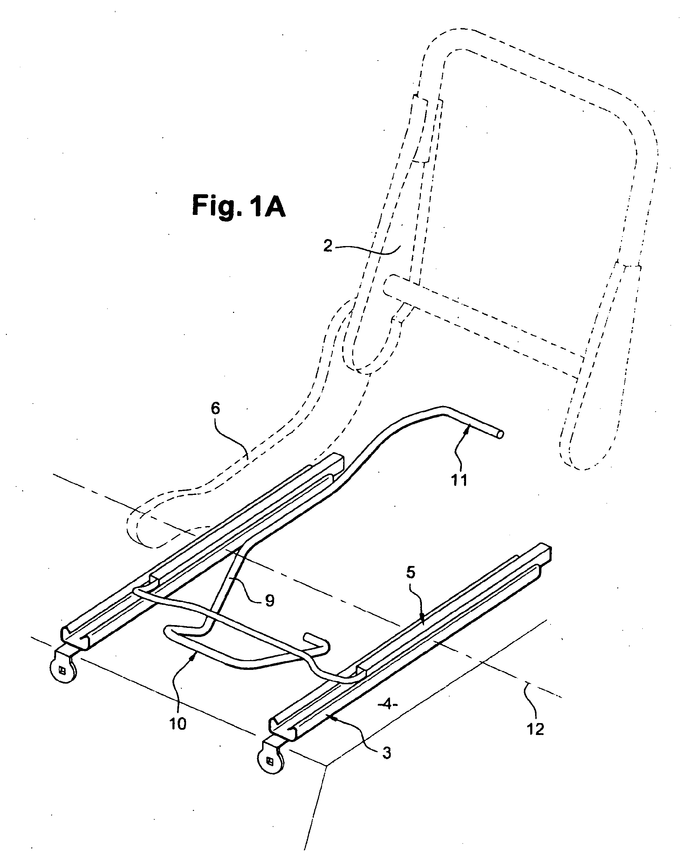

La figure 1 A représente un siège 2 de véhicule automobile comportant un dossier et un cadre d'assise 6. Une première glissière 3 est solidaire d'un élément de structure 4, par exemple le plancher du véhicule. Cette première glissière 3 est fixée de façon classique par vissage ou soudage directement sur la structure du véhicule. Une fois en position, ces glissières 3 reçoivent un second jeu de glissière 5 qui peuvent coulisser longitudinalement dans les premières. Les secondes glissières 5 supportent le siège 2 et lui transmettent le mouvement de translation souhaité par l'utilisateur. Ces deux jeux de glissières 3 et 5 sont des profilés métalliques coulissant les uns par rapport aux autres grâce à des roulements à billes conventionnels. Ces profilés 3 et 5 supportent toute l'armature du siège 2 et garantissent la sécurité des occupants en cas de déformations dues à un choc par exemple.

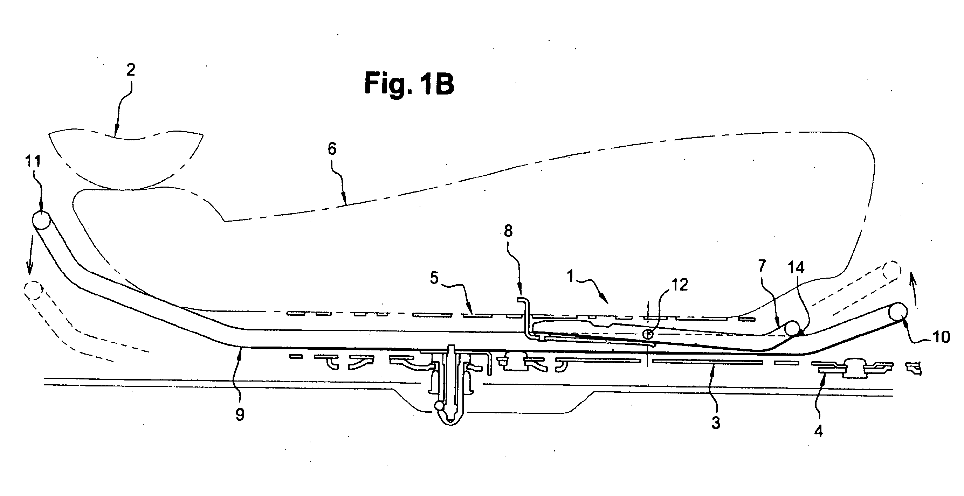

Un mécanisme de verrouillage 1 relié à la seconde glissière 5 maintient celle-ci en position par rapport à la première glissière 3. Ce mécanisme 1 comporte un système de rappel 8 d'un premier palonnier 7 destiné à libérer ou à maintenir en position de siège 2, tel que représenté sur la figure 1 B. Une lame métallique comporte une première extrémité reliée à la seconde glissière 5 et une autre extrémité libre évoluant entre une position d'utilisation et une position de repos dans laquelle le siège est immobilisé. Le premier palonnier 7 est lié à la seconde glissière 5 par une liaison pivot d'axe 12 lui autorisant un débattement permettant d'actionner la lame métallique.

L'extrémité libre de cette lame comporte des excroissances indexant la position du siège et s'insérant dans des formes complémentaires de la première glissière 3 fixée au plancher 4. La lame métallique jouant le rôle de ressort de rappel du palonnier 7 évolue dans un sens sensiblement perpendiculaire au sens de déplacement longitudinal du siège 2.

Dans le mode de réalisation de la figure 1, un second palonnier 9 est soudé sur le premier palonnier de sorte qu'une première excroissance 10 émerge vers l'avant du siège pour être manipulée par l'utilisateur assis sur le siège 2 par exemple. Un cordon de soudure 14, ou tout autre moyen de fixation, permet de solidariser le premier palonnier 7 au second palonnier 9. Celui-ci se prolonge par une seconde excroissance 11 s'étendant vers l'arrière du siège de façon à ce qu'il forme une poignée de libération du siège 2 ou de maintien en position.

Ce palonnier 9 est une tige métallique formée selon la forme souhaitée et représentée sur la figure 1 A et 1 B. Ce premier mode de réalisation prévoit une liaison pivot unique dont l'axe 12 supporte les deux palonniers 7 et 9.

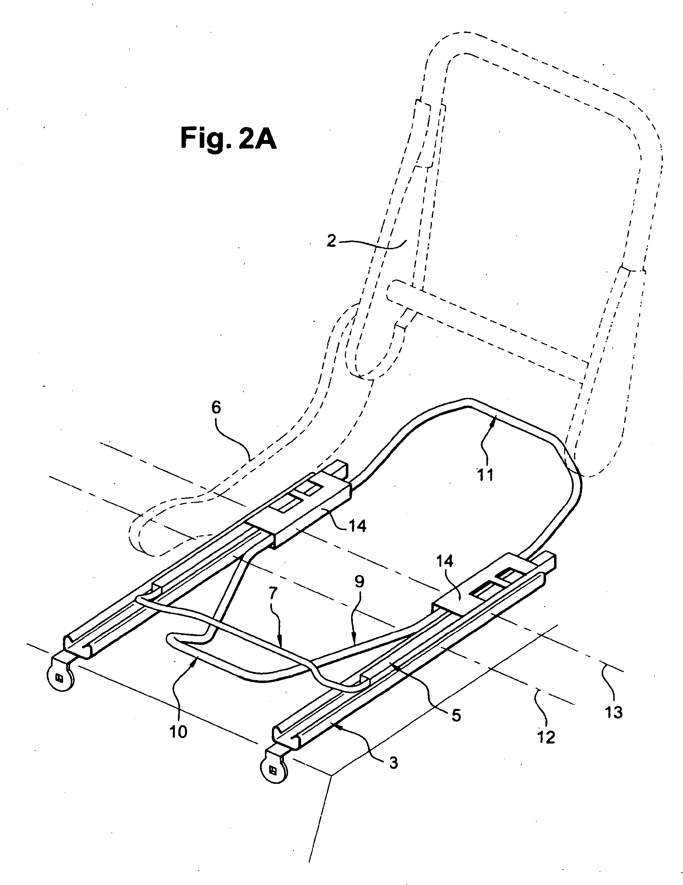

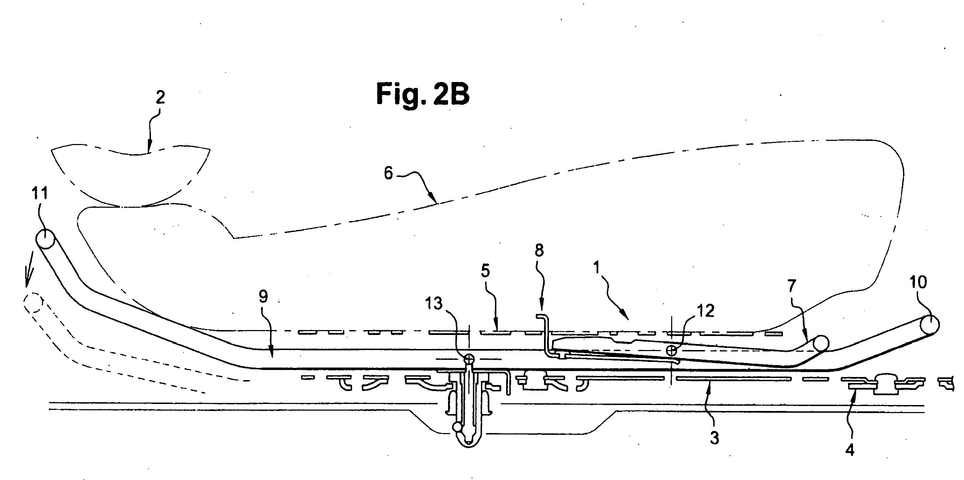

Dans le second mode de réalisation des figures 2A et 2B, le palonnier 10 forme une boucle métallique qui est liée aux deux rails de la seconde glissière 5 suivant une liaison pivot d'axe 13. L'excroissance avant 10 glisse alors le long du premier palonnier 7 lorsqu'elle est actionnée.

Cette seconde liaison pivot offre un débattement réduit, de l'ordre de 3 degré à 7 degré, de l'excroissance arrière 11 lorsqu'elle est actionnée, du fait de son bras de levier plus court que dans le précédent mode de réalisation.

Le palonnier 10 est bloqué en position lorsqu'il revient en position de repos de façon à éviter qu'il vibre pendant les phases de roulage, ou qu'il perturbe le déplacement du siège.

Dans les deux modes de réalisation tels que décrits précédemment, l'utilisateur peut actionner le palonnier 9 d'une part lorsqu'il est assis sur le siège 2, et d'autre part lorsqu'il souhaite modifier l'espace disponible du coffre du véhicule. En effet, l'invention présente l'avantage de pouvoir commander la position des sièges arrière depuis l'ouverture du coffre.

De plus, la manipulation du mécanisme de verrouillage est facilitée du fait que l'utilisateur retrouve le même principe de manipulation à l'avant et à l'arrière du siège 2.

## Revendications

1. Mécanisme de verrouillage (1) des glissières d'un siège (2) de véhicule automobile comportant une première glissière (3) liée à un élément de structure (4) selon un axe longitudinal du véhicule, une seconde glissière (5) coulissant dans la première glissière (3) et supportant la cadre d'assise (6) du siège (2), un premier palonnier (7) pivotant dans la seconde glissière (5) selon un axe sensiblement perpendiculaire aux deux glissières coaxiales maintenues dans une position souhaitée l'une par rapport à l'autre par un mécanisme de rappel (8) du premier palonnier (7), un second palonnier (9) comportant une première excroissance (10) orientée vers l'avant du siège (2) et une deuxième excroissance (11) orientée vers l'arrière du siège (2) de sorte que le déplacement longitudinal du siège (2) est commandé par les deux excroissances (10, 11), **caractérisé en ce que** le second palonnier (9) pivotant dans la seconde glissière est lié au premier palonnier (7).

2. Mécanisme de verrouillage (1) selon la revendication 1, **caractérisé en ce que** le mécanisme de rappel (8) du premier palonnier (7) est une lame métallique dont une première extrémité est solidaire de la seconde glissière (5) et la seconde extrémité comporte au moins une excroissance indexant la position du siège (2) dans la première glissière (3).

3. Mécanisme de verrouillage (1) selon l'une des revendications 1 ou 2, **caractérisé en ce que** la première excroissance (10) du second palonnier (9) est soudée au premier palonnier (7).

4. Mécanisme de verrouillage (1) selon la revendication 3, **caractérisé en ce que** le premier palonnier (7) et le second palonnier (9) sont solidaires d'un même axe de rotation (12) constituant la liaison pivot.

5. Mécanisme de verrouillage (1) selon l'une des revendications 1 ou 2, **caractérisé en ce que** la première excroissance (10) du second palonnier (9) coulisse sur le premier palonnier (7).

6. Mécanisme de verrouillage (1) selon la revendication 5, **caractérisé en ce que** le second palonnier (9) est lié à un axe de rotation (13) différent de celui du premier palonnier (7) permettant un débattement réduit de la deuxième excroissance arrière (11).

7. Mécanisme de verrouillage (1) selon l'une des revendications 5 à 6, **caractérisé en ce qu'**au moins un carter métallique (14) monté sur la seconde glissière (5) protège le débattement du second palonnier (9).

8. Siège (2) de véhicule automobile comportant un mécanisme de verrouillage (1) selon l'une des revendications 1 à 7.

## Claims

1. Locking mechanism (1) for the rails of a motor vehicle seat (2) comprising a first rail (3) connected to a structural element (4) along a longitudinal axis of the vehicle, a second rail (5) sliding in the first rail (3) and supporting the squab frame (6) of the seat (2), a first crossbar (7) pivoting in the second rail (5) along an axis substantially perpendicular to the two coaxial rails held in a desired position relative to one another by a return mechanism (8) of the first crossbar (7), a second crossbar (9) comprising a first protuberance (10) oriented toward the front of the seat (2) and a second protuberance (11) oriented toward the rear of the seat (2) so that the longitudinal movement of the seat (2) is controlled via the two protuberances (10, 11), **characterized in that** the second crossbar (9) pivoting in the second rail is connected to the first crossbar (7).

2. Locking mechanism (1) according to Claim 1, **characterized in that** the return mechanism (8) of the first crossbar (7) is a metal strip whose first end is fixedly attached to the second rail (5) and the second end comprises at least one protuberance indexing the position of the seat (2) in the first rail (3).

3. Locking mechanism (1) according to one of Claims 1 or 2, **characterized in that** the first protuberance (10) of the second crossbar (9) is welded to the first crossbar (7).

4. Locking mechanism (1) according to Claim 3, **characterized in that** the first crossbar (7) and the second crossbar (9) are fixedly attached to one and the same rotation shaft (12) forming the pivot link.

5. Locking mechanism (1) according to one of Claims 1 or 2, **characterized in that** the first protuberance (10) of the second crossbar (9) slides on the first crossbar (7) .

6. Locking mechanism (1) according to Claim 5, **characterized in that** the second crossbar (9) is connected to a rotation shaft (13) that is different from that of the first crossbar (7) allowing a reduced range of movement of the second rear protuberance (11).

7. Locking mechanism (1) according to one of Claims 5 or 6, **characterized in that** at least one metal casing (14) mounted on the second rail (5) protects the range of movement of the second crossbar (9).

8. Motor vehicle seat (2) comprising a locking mechanism (1) according to one of Claims 1 to 7.

## Patentansprüche

1. Mechanismus (1) zum Arretieren der Schienen eines Kraftfahrzeugsitzes (2) mit einer ersten Schiene (3), die entlang einer Längsachse des Fahrzeugs mit einem Strukturelement (4) verbunden ist, einer zweiten Schiene (5), die in der ersten Schiene (3) gleitet und den Sitzrahmen (6) des Sitzes (2) stützt, einem ersten Hebel (7), der entlang einer Achse in der zweiten Schiene (5) schwenkt, wobei die Achse im Wesentlichen senkrecht zu den beiden koaxialen Schienen verläuft, die durch einen Rückholmechanismus (8) des ersten Hebels (7) in einer gewünschten Position zueinander gehalten werden, und einem zweiten Hebel (9), der eine erste Protuberanz (10), die zur Vorderseite des Sitzes (2) ausgerichtet ist, und eine zweite Protuberanz (11), die zur Rückseite des Sitzes (2) ausgerichtet ist, umfasst, so dass die Längsverschiebung des Sitzes (2) durch die beiden Protuberanzen (10, 11) gesteuert wird, **dadurch gekennzeichnet, dass** der in der zweiten Schiene schwenkende zweite Hebel (9) mit dem ersten Hebel (7) verbunden ist.

2. Arretiermechanismus (1) nach Anspruch 1, **dadurch gekennzeichnet, dass** es sich bei dem Rückholmechanismus (8) des ersten Hebels (7) um ein Metallblatt handelt, dessen erstes Ende fest mit der zweiten Schiene (5) verbunden ist und dessen zweites Ende mindestens eine Protuberanz umfasst, die die Position des Sitzes (2) in der ersten Schiene (3) verrastet.

3. Arretiermechanismus (1) nach Anspruch 1 oder 2, **dadurch gekennzeichnet, dass** die erste Protuberanz (10) des zweiten Hebels (9) mit dem ersten Hebel (7) verschweißt ist.

4. Arretiermechanismus (1) nach Anspruch 3, **dadurch gekennzeichnet, dass** der erste Hebel (7) und der zweite Hebel (9) fest mit derselben Rotationsachse (12) verbunden sind, die die Schwenkverbindung darstellt.

5. Arretiermechanismus (1) nach Anspruch 1 oder 2, **dadurch gekennzeichnet, dass** die erste Protuberanz (10) des zweiten Hebels (9) am ersten Hebel (7) gleitet.

6. Arretiermechanismus (1) nach Anspruch 5, **dadurch gekennzeichnet, dass** der zweite Hebel (9) mit einer anderen Rotationsachse (13) als mit der des ersten Hebels (7) verbunden ist, was eine reduzierte Auslenkung der zweiten hinteren Protuberanz (11) gestattet.

7. Arretiermechanismus (1) nach Anspruch 5 oder 6, **dadurch gekennzeichnet, dass** mindestens ein an der zweiten Schiene (5) montiertes Metallgehäuse (14) die Auslenkung des zweiten Hebels (9) schützt.

8. Kraftfahrzeugsitz (2) mit einem Arretiermechanismus (1) nach einem der Ansprüche 1 bis 7.
